Europäisches Patentamt

European Patent Office

Office européen des brevets

(11) Numéro de publication : **0 357 619 B1**

(12) # FASCICULE DE BREVET EUROPEEN

(45) Date de publication du fascicule du brevet :
27.12.91 Bulletin 91/52

(51) Int. Cl.⁵ : **B65H 71/00, B65H 55/00, B29C 65/16**

(21) Numéro de dépôt : **88902498.0**

(22) Date de dépôt : **04.03.88**

(86) Numéro de dépôt international :
**PCT/FR88/00128**

(87) Numéro de publication internationale :
**WO 88/06564 07.09.88 Gazette 88/20**

(54) **PROCEDE POUR ASSURER L'ADHERENCE DES FIBRES DANS UNE BOBINE DE DEVIDAGE.**

(30) Priorité : 06.03.87 FR 8703066

(43) Date de publication de la demande :
14.03.90 Bulletin 90/11

(45) Mention de la délivrance du brevet :
27.12.91 Bulletin 91/52

(84) Etats contractants désignés :
DE FR GB IT NL SE

(56) Documents cités :
DE-A- 2 306 684
DE-A- 3 201 019
DE-A- 3 520 195

(56) Documents cités :
FR-A- 1 519 888
FR-A- 2 013 949
FR-A- 2 289 588
Patent Abstracts of Japan, vol. 10, No. 207
(M-500) (2263), 19 juillet 1986

(73) Titulaire : THOMSON-CSF
51, Esplanade du Général de Gaulle
F-92800 Puteaux (FR)

(72) Inventeur : KERVERN, Gilles
Kroas Saliou
F-29263 Plouzane (FR)

(74) Mandataire : Desperrier, Jean-Louis et al
THOMSON-CSF SCPI
F-92045 PARIS LA DEFENSE CEDEX 67 (FR)

EP 0 357 619 B1

Jouve, 18, rue Saint-Denis, 75001 PARIS

## Description

La présente invention concerne les procédés qui permettent d'assurer l'adhérence des fibres enroulées sur une bobine destinée à être dévidée à grande vitesse. Elle s'applique plus particulièrement à la fabrication des bobines de fibres optiques destinées à assurer le filoguidage d'engins tels que des torpilles ou des missiles.

On utilise depuis longtemps pour guider les missiles un câble comportant des fils conducteurs qui transmettent les signaux de guidage depuis un poste fixe jusqu'au missile en évitant ainsi toutes les interférences hertziennes. Ce câble est bobiné sur une bobine contenue dans le corps du missile. Cette bobine se dévide au fur et à mesure que le missile progresse vers sa cible. La traction assurée par la progression du missile est assez importante, ce qui nécessite pour obtenir une résistance suffisante du câble qu'il ait un diamètre assez grand. Comme la masse de la bobine ne peut pas être trop grande par rapport à celle du missile, la longueur du câble, et donc la distance de guidage, se trouve assez limitée.

On sait remplacer les conducteurs métalliques qui permettent la transmission de signaux tels que ces signaux de guidage par des fibres optiques dont le diamètre est considérablement plus petit que celui de ces conducteurs. Comme de surcroît la masse spécifique du verre constituant une telle fibre est sensiblement inférieure à celle des métaux constituant les fils conducteurs, on peut bobiner des longueurs de câble beaucoup plus importantes pour une même masse et donc guider l'engin sur une distance beaucoup plus longue. En fait il est parfaitement possible d'utiliser une fibre optique unique convenablement gainée. Nous utiliserons donc dans la suite de ce texte le terme de fibre pour désigner indifféremment une telle fibre ou un câble formé de plusieurs de ces fibres. Ceci est particulièrement intéressant dans le cas des torpilles lancées par un sous-marin qui peut ainsi tirer à une grande distance de son but.

Il faut que le dévidage de la fibre se fasse sans risque de cassure. Si on peut dimensionner assez facilement le diamètre de la fibre pour qu'elle résiste à l'effort de traction à tout instant, il reste à assurer le bobinage de telle manière que lors du dévidage plusieurs spires ne soient pas entraînées simultanément, ce qui provoquerait des boucles amenant un arrêt brutal du dévidage et la cassure de la fibre.

Pour éviter un tel dévidage simultané de plusieurs spires on réalise d'abord un bobinage particulièrement soigné. Pour maintenir l'ordre de ce bobinage tandis que la fibre se dévide, il est connu de faire adhérer les unes aux autres les spires de cette fibre. Le degré d'adhésion des spires entre elles doit être contrôlé d'une manière très précise de façon à ne pas trop augmenter l'effort de traction pendant le dévidage, tout en empêchant cependant les spires de bouger les unes par rapport aux autres ce qui faciliterait le dévidage simultané de plusieurs d'entre elles.

Pour faire adhérer ainsi les fibres entre elles il est connu de faire un collage, mais les résultats en sont décevants parce que la colle a tendance à faire adhérer les spires en masse en passant d'une couche à l'autre. De plus dans le cas des fibres optiques le matériau qui constitue la gaine de celle-ci se colle souvent difficilement, et le contrôle de l'adhésion est d'autant plus difficile que l'on a des difficultés à obtenir cette adhésion.

Pour pallier ces difficultés, l'invention propose de faire adhérer les spires les unes au autres en soudant la gaine de la fibre formant ces spires au fur et à mesure du bobinage, de préférence à l'aide d'un faisceau laser.

D'autres particularités et avantages de l'invention apparaîtront clairement dans la description suivante faite à titre d'exemple non limitatif en regard des figures annexées qui représentent :

- La figure 1, une machine mettant en oeuvre l'invention ;
- La figure 2, une vue en coupe de deux rangées de spires superposées ;
- La figure 3, un détail de la figure 1 montrant l'endroit du soudage.

Sur la figure annexée, la fibre optique 101 à bobiner est stockée sur un touret 100. Cette fibre vient s'enrouler sur un mandrin 104 entraîné en rotation régulière par un moteur 103 pour former une bobine 102. Un dispositif de trancanage 105, entraîné dans un mouvement de va et vient par un moteur 106, permet de bobiner le fil 101 sous la forme de couches régulières de spires elles-mêmes régulières.

Ces dispositifs sont connus en eux-mêmes dans les appareillages permettant de bobiner des fils quelconques.

Selon l'invention un laser 107, par exemple du type Nd YAG, émet un faisceau lumineux qui est collecté par une fibre optique souple de transport 108. L'autre extrémité de cette fibre souple est fixée au dispositif de trancanage 105, de manière à ce que la lumière qui en sort soit dirigée sur le point de contact entre la partie de la fibre 101 qui vient s'enrouler à la sortie du dispositif de trancanage sur la bobine 102 et la partie de cette même fibre qui forme la spire précédant immédiatement celle qui s'enroule.

Sous l'effet de l'énergie calorifique transportée par la lumière, la gaine de la fibre optique fond et il se produit une soudure entre les deux spires adjacentes au fur et à mesure que cette fibre s'enroule.

La fibre souple de transport suit donc le dispositif de trancanage dans son mouvement de va et vient, et l'extrémité de cette fibre est suffisamment proche du point à souder pour qu'il n'y ait généralement pas besoin de procéder à une focalisation particulière du faisceau lumineux dont la divergence en sortie de la fibre est relativement faible. A titre de variante on peut toutefois prévoir une optique de focalisation, éventuellement asservie selon des techniques connues pour maintenir la focalisation sur le point désiré.

Bien que la réalisation utilisant une telle fibre souple transporteuse d'énergie soit la plus simple, on peut également prévoir un dispositif comportant un jeu de miroirs mobiles montés sur un bras articulé, lui-même fixé au dispositif de trancanage de façon à ramener l'énergie lumineuse au point désiré.

Afin d'obtenir un collage qui ne soit pas trop résistant pour s'opposer au dévidage, il est souhaitable de contrôler en permanence l'énergie fournie par le laser 107 afin de limiter la profondeur de fusion de la gaine. A titre d'exemple, pour une fibre d'un diamètre de 1mm on pourra faire fondre la gaine sur une profondeur d'environ 0,1mm.

La puissance à utiliser pour un tel laser est de l'ordre de quelques dizaines de watts pour des gaines fabriquées de manière usuelle en P.T.F.E. ou en polyamide.

Pour cela on utilise un boîtier de contrôle 109 du laser 107, qui fonctionne notamment à partir des signaux provenant des moteurs 103 et 106, qui indiquent la vitesse d'enroulement de la fibre et la position de celle-ci par rapport aux extrémités de la bobine 102.

Inversement ce boîtier de commande peut éventuellement contrôler les moteurs 103 et 106 à partir de la puissance mesurée sur le laser 107.

L'intérêt de tenir compte de la position du dispositif de trancanage par rapport aux extrémités de la bobine vient de ce qu'il peut être utile d'adapter l'adhérence entre les spires à la position de celles-ci sur la bobine lorsque dans certains cas de configuration l'effort de traction lors du dévidage varie selon la place de la spire sur la bobine lors du dévidage.

Par ailleurs il peut être intéressant, plutôt que de chercher à obtenir une soudure continue de très faible profondeur, donc difficilement maîtrisable, de procéder à une soudure par points, mais à plus grande profondeur. Dans ce cas l'arrivée du faisceau lumineux est interrompue régulièrement en prévoyant par exemple un interrupteur commandable, ou plus simplement en coupant régulièrement l'alimentation du laser 107.

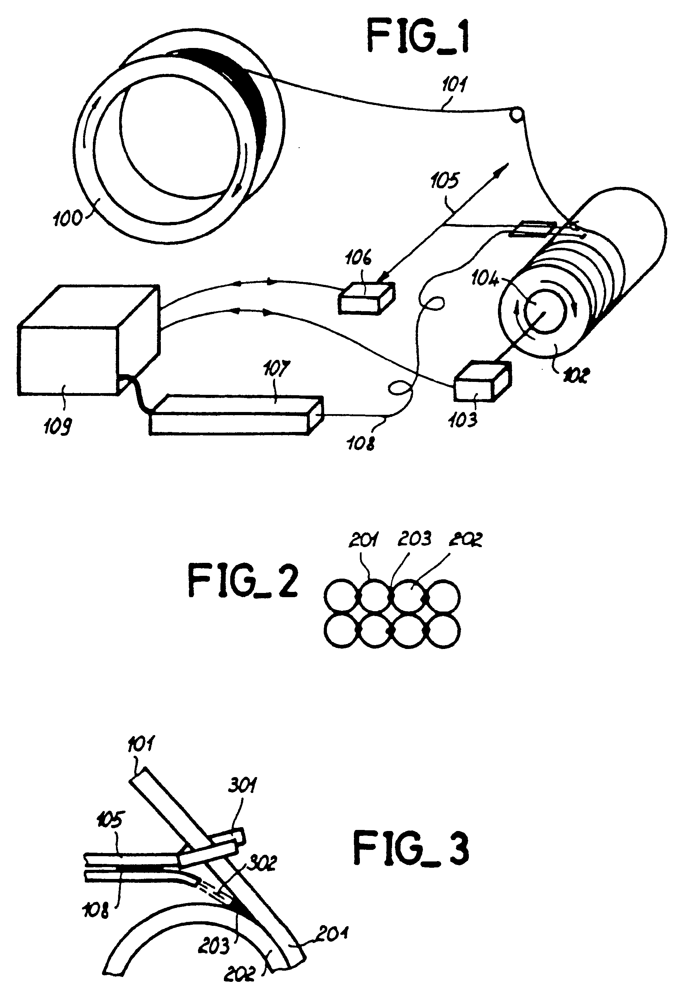

On a représenté sur la figure 2 une vue en coupe de quelques spires formant deux couches superposées. On voit ainsi que deux spires consécutives telles que 201 et 202 sont réunies par une soudure latérale 203 qui les maintient bord à bord, alors qu'il n'y a aucune adhérence d'une couche à la suivante. Ainsi lors du dévidage toutes les spires de la couche qui se dévident seront bien maintenues entre elles pour éviter de faire glisser plusieurs spires simultanément, alors que les spires de la couche inférieure, qui ne risquent pas de se débobiner à ce moment là, ne sont pas liées à la couche supérieure et donc n'exerce aucun effort de traction nuisible sur la fibre en train de se dévider. Il est clair que la précision obtenue par un tel procédé est pratiquement hors de portée d'un procédé par collage, puisque la colle a toujours tant soit peu tendance à baver et à se répandre pour faire adhérer les spires entre elles un peu n'importe où, aussi bien entre spires adjacentes qu'entre spires de couches superposées.

On a représenté sur la figure 3 une vue partielle d'une spire 201 en train d'être bobinée à côté de la spire précédente 202 déjà complète, avec à l'endroit où le contact se fait entre ces deux spires un point de soudage 203 en cours de formation. La fibre 101 est guidée par l'extrémité du disposif de trancanage 101 qui comporte un élément de guidage 301, qui a ici la forme d'une fourchette dans laquelle coulisse la fibre 101. La fibre transporteuse de lumière 108 est fixée à l'extrémité du dispositif 105 juste avant la fourchette 301. L'extrémité de cette fibre 108 est légèrement courbée de façon que le faisceau lumineux 302 soit dirigé vers le point 203.

Le procédé selon l'invention n'est pas limité à son application aux fibres optiques ni à l'utilisation de l'énergie lumineuse provenant d'un laser. On peut faire adhérer de cette manière tous les câbles et tous les fils enroulés pour former une bobine et comportant une couche extérieure fusible, et utiliser toutes les sources d'énergie rayonnée susceptibles d'être concentrées en un point et de dégager à cet endroit de l'énergie calorifique.

## Revendications

1. Procédé pour assurer l'adhérence des spires d'une fibre (101) disposée pour former une bobine (102), dans lequel on enroule cette fibre selon des spires juxtaposées disposées en couches superposées, caractérisé en ce que l'on concentre un faisceau d'énergie rayonnée (302) sur le point où la spire (101) en cours d'enroulement pour former une spire (201) vient rencontrer la spire précédente (202), pour faire fondre les parties périphériques venant en contact de ces deux spires et souder ensemble (203) celles-ci.

2. Procédé selon la revendication 1, caractérisé en ce que l'on module (109) la puissance du faisceau d'énergie rayonnée pour faire varier la profondeur de fusion de la gaine de la fibre et la résistance de la soudure obtenue.

3. Procédé selon la revendication 2, caractérisé en ce que cette modulation consiste en une interruption du faisceau d'énergie rayonnée pour obtenir une soudure par points de longueur et d'espacement variables.

4. Procédé selon l'une quelconque des revendications 2 et 3, caractérisé en ce que la résistance de la soudure varie selon l'emplacement des fibres sur la bobine.

5. Procédé selon l'une quelconque des revendications 1 à 4, caractérisé en ce que le faisceau d'énergie rayonnée est un faisceau lumineux.

6. Procédé selon la revendication 5, caractérisé en ce que l'on obtient l'énergie lumineuse à partir d'un laser (107) et que l'on véhicule cette énergie lumineuse jusqu'au point de soudure avec une fibre optique de transport souple ( 108).

7. Procédé selon l'une quelconque des revendications 1 à 6, caractérisé en ce que la fibre (101) formant la bobine (102) est une fibre optique.

## Patentansprüche

1. Verfahren, um die Befestigung der Windungen einer einen Wickel (102) bildenden Faser (101) sicherzustellen, wobei die Faser Windungen nebeneinander und in übereinandenliegenden Schichten angeordnet werden, dadurch gekennzeichnet, daß man ein Energiestrahlungsbündel (302) auf den Punkt richtet, an dem die gerade zur Bildung einer Windung (201) aufgerollte Faser (101) auf die vorhergehende Windung (202) trifft, um die peripheren und sich berührenden Bereiche der beiden Windungen zu schmelzen und miteinander zu verschweißen (203).

2. Verfahren nach Anspruch 1, dadurch gekennzeichnet, daß man die Leistung des Energiestrahlungsbündels moduliert (109), um die Tiefe des Schmelzbereichs der Hülle der Faser und die Festigkeit der erhaltenen Schweißung zu variieren.

3. Verfahren nach Anspruch 2, dadurch gekennzeichnet, daß diese Modulation darin besteht, das Strahlungsenergiebündel zu unterbrechen, um eine Punktschweißung variabler Länge und variablen Abstands zu erreichen.

4. Verfahren nach einem beliebigen der Ansprüche 2 und 3, dadurch gekennzeichnet, daß die Festigkeit der Schweißung mit der Lage der Fasern auf dem Wickel variiert.

5. Verfahren nach einem beliebigen der Ansprüche 1 bis 4, dadurch gekennzeichnet, daß das Energiestrahlungsbündel ein Lichtstrahlenbündel ist.

6. Verfahren nach Anspruch 5, dadurch gekennzeichnet, daß die Lichtenergie von einem Laser (107) erzeugt wird und daß diese Lichtenergie mit Hilfe einer biegsamen Transport-Lichtleitfaser (108) bis zum Schweißpunkt gebracht wird.

7. Verfahren nach einem beliebigen der Ansprüche 1 bis 6, dadurch gekennzeichnet, daß die den Wickel (102) bildende Faser (101) eine Lichtleitfaser ist.

## Claims

1. A method for ensuring the adhesion of the turns of a fibre (101) disposed to constitute a coil (102), method according to which the fibre is wound along adjacent turns and in superposed layers, characterized in that an energy beam (302) is centered onto the point where the fibre (101), which is being wound for constituting a turn (201), touches the preceding turn (202), in order to melt the peripheral adjacent portions of these two turns and to obtain a weld (203) therebetween.

2. A method according to claim 1, characterized in that the power of the energy beam is modulated (109) in order to vary the depth of melting of the fibre sheath and the resistance of the weld thus obtained.

3. A method according to claim 2, characterized in that this modulation consists in interrupting the energy beam in order to obtain a spot welding of variable length and spacing.

4. A method according to any one of claims 2 and 3, characterized in that the resistance of the weld varies according to the location of the fibres on the coil.

5. A method according to any one of claims 1 to 4, characterized in that the energy beam is a light beam.

6. A method according to claim 5, characterized in that the light energy is obtained from a laser (107) and that this light energy is conveyed to the welding point by means of a resilient optical transport fibre (108).

7. A method according to any one of claims 1 to 6, characterized in that the fibre (101) constituting the coil (102) is an optical fibre.

# FIG_1

# FIG_2

# FIG_3